(19) Europäisches Patentamt
European Patent Office
Office européen des brevets

(11) **EP 3 919 290 B1**

(12) **EUROPEAN PATENT SPECIFICATION**

(45) Date of publication and mention
of the grant of the patent:
**10.04.2024 Bulletin 2024/15**

(21) Application number: **21177042.5**

(22) Date of filing: **01.06.2021**

(51) International Patent Classification (IPC):
**B60C 1/00** *(2006.01)*    **C08G 18/00** *(2006.01)*
**C08L 1/02** *(2006.01)*

(52) Cooperative Patent Classification (CPC):
(C-Sets available)
**B60C 1/00; B60C 1/0016; B60C 1/0025;
B60C 1/0041; C08G 18/10; C08G 18/3206;
C08G 18/44; C08G 18/4854; C08G 18/76;
C08L 1/02; C08L 97/02; C09D 175/04;**
B60C 2001/005; B60C 2001/0066      (Cont.)

(54) **TIRE AND THERMOPLASTIC ELASTOMER COMPOSITE**

REIFEN UND THERMOPLASTISCHER ELASTOMERVERBUNDSTOFF

PNEU ET COMPOSITE ÉLASTOMÈRE THERMOPLASTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.06.2020 JP 2020098473**

(43) Date of publication of application:
**08.12.2021 Bulletin 2021/49**

(73) Proprietor: **Sumitomo Rubber Industries, Ltd.
Kobe-shi, Hyogo-ken 651-0072 (JP)**

(72) Inventors:
• **MIYAZAKI, Sumiko
Kobe-shi, Hyogo, 651-0072 (JP)**
• **SATO, Daisuke
Kobe-shi, Hyogo, 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 2 886 369        EP-A1- 3 360 695
WO-A1-2020/110955   JP-A- 2016 003 265
US-A1- 2008 207 846   US-A1- 2009 018 256
US-A1- 2017 333 602**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

(52) Cooperative Patent Classification (CPC): (Cont.)

C-Sets
**C08G 18/10, C08G 18/3206**

**Description**

TECHNICAL FIELD

The present invention relates to tires and thermoplastic elastomer composites.

BACKGROUND ART

To make tires more recyclable, tires that include components containing thermoplastic elastomers have been proposed. However, since thermoplastic elastomers do not have chemical bonds between the molecular chains as in vulcanized rubber materials, such tires may be deformed when they are left for a long time, possibly resulting in deterioration of the ride quality after long-term storage. Further prior art thermoplastic elastomer composites or elastomer composites are disclosed in the following documents JP 2016 003 265 A, EP 3 360 695 A1, US 2008 / 207 846 A1, US 2009 / 018 256 A1, WO 2020 / 110 955 A1 & EP 3 888 938 A1, US 2017 / 333 602 A1 and EP 2 886 369 A1.

SUMMARY OF INVENTION

TECHNICAL PROBLEM

The present invention aims to solve the problem and provide tires and thermoplastic elastomer composites with excellent ride quality after long-term storage.

SOLUTION TO PROBLEM

The present invention provides a thermoplastic elastomer composite as defined in claim 1. The thermoplastic elastomer composite satisfies the following relationship:

$$E/H \leq 0.6$$

wherein E represents a compression set (%) at 70°C and H represents a hardness at 23°C, wherein the thermoplastic elastomer composite comprises at least one fiber,
wherein the fiber is a microfibrillated plant fiber, wherein the microfibrillated plant fiber is an oxidized microfibrillated plant fiber, wherein the oxidized microfibrillated plant fiber is obtained by oxidation process using an N-oxyl compound, wherein the N-oxyl compound is 2,2,6,6-tetramethylpiperidine-1-oxyl, wherein an average fiber diameter of the microfibrillated plant fibers is 20 nm or more and 50 nm or less, and wherein an average fiber length of the microfibrillated plant fibers is 300 nm or more and 3 pm or less.
Preferably, the thermoplastic elastomer composites have a compression set (E, %) at 70°C of 50% or less.
Preferably, the thermoplastic elastomer composites have a hardness (H) at 23°C of 50 to 95.
The present invention also relates to tires, having a tire component including an elastomer composition, the elastomer composition containing at least one thermoplastic elastomer composite satisfying the following relationship (1) :

$$E/H \leq 0.6$$

wherein E represents a compression set (%) at 70°C and H represents a hardness at 23°C, wherein the thermoplastic elastomer composite comprises at least one fiber,
wherein the fiber is a microfibrillated plant fiber, wherein the microfibrillated plant fiber is an oxidized microfibrillated plant fiber, wherein the oxidized microfibrillated plant fiber is obtained by oxidation process using an N-oxyl compound, wherein the N-oxyl compound is 2,2,6,6-tetramethylpiperidine-1-oxyl, wherein an average fiber diameter of the microfibrillated plant fibers is 20 nm or more and 50 nm or less, and wherein an average fiber length of the microfibrillated plant fibers is 300 nm or more and 3 pm or less.
Preferably, the thermoplastic elastomer composite in the tires satisfies the following relationship:

$$E/H \leq 0.5.$$

Preferably, the thermoplastic elastomer composite in the tires satisfies the following relationship:

$$E/H \leq 0.4.$$

Preferably, the tire component of the tires is a tire-supporting component.

Preferably, the thermoplastic elastomer composite has a compression set (E, %) at 70°C of 50% or less.

Preferably, the thermoplastic elastomer composite has a hardness (H) at 23°C of 50 to 95.

ADVANTAGEOUS EFFECTS OF INVENTION

The tires according to the present invention have a tire component including an elastomer composition which contains at least one thermoplastic elastomer composite satisfying relationship (1) with respect to the compression set (E, %) at 70°C and the hardness (H) at 23°C. Thus, the present invention provides tires and thermoplastic elastomer composites with excellent ride quality after long-term storage.

DESCRIPTION OF EMBODIMENTS

The tires of the present invention have a tire component including an elastomer composition which contains at least one thermoplastic elastomer composite satisfying relationship (1) with respect to the compression set (E, %) at 70°C and the hardness (H) at 23°C. Such tires provide excellent ride quality after long-term storage.

The mechanism of this advantageous effect is not clear, but is believed to be as follows.

As mentioned earlier, for example, tires containing thermoplastic elastomers may be deformed when they are left for a long time, possibly resulting in deterioration of the ride quality after long-term storage. To address this concern, the present invention may use a tire component containing a thermoplastic elastomer composite in which the relationship between the compression set (E, %) at 70°C and the hardness (H) at 23°C is adjusted to $E/H \leq 0.6$ to reduce deformation due to the load applied to the tire component while lowering strain accumulation. Thus, it is believed that the present invention provides tires containing thermoplastic elastomers with good ride quality even after they are stored for a long time, for example.

Moreover, the thermoplastic elastomer composites of the present invention satisfy the above relationship with respect to the compression set (E, %) at 70°C and the hardness (H) at 23°C. With such composites, it is believed to be possible to reduce deformation due to the load and also to lower strain accumulation, as described above. Thus, the thermoplastic elastomer composites have excellent storage properties and can be suitably used in applications such as building components which may be stored for a long time.

Accordingly, the tires solve the problem (purpose) of providing excellent ride quality after long-term storage by having a structure with a tire component including an elastomer composition which contains a thermoplastic elastomer composite satisfying the relationship: $E/H \leq 0.6$ with E representing the compression set (%) at 70°C and H representing the hardness at 23°C. In other words, the structure of the relationship: $E/H \leq 0.6$ does not define the problem (purpose), and the problem herein is to provide excellent ride quality after long-term storage. In order to provide a solution to this problem, a structure satisfying such a parameter has been devised.

The thermoplastic elastomer composites satisfy the following relationship (1):

$$E/H \leq 0.6$$

wherein E represents the compression set (%) at 70°C and H represents the hardness at 23°C.

From the standpoint of ride quality after long-term storage, the E/H ratio is preferably $E/H \leq 0.5$, more preferably $E/H \leq 0.4$. The lower limit is preferably $E/H \geq 0$, more preferably $E/H \geq 0.1$, still more preferably $E/H \geq 0.2$.

From the standpoint of ride quality after long-term storage, the compression set (E, %) at 70°C of the thermoplastic elastomer composites is preferably 50% or less, more preferably 45% or less, still more preferably 40% or less, particularly preferably 35% or less. The lower limit is not limited, and a smaller E (%) is more desirable.

The lower limit of the hardness (H) at 23°C of the thermoplastic elastomer composites is preferably 50 or more, more preferably 55 or more, still more preferably 60 or more. The upper limit is preferably 95 or less, more preferably 90 or less, still more preferably 85 or less, particularly preferably 80 or less. When the hardness is within the range indicated above, good ride quality after long-term storage tends to be obtained.

The compression set (E, %) at 70°C is determined in accordance with JIS K6262:2013 and may be measured as described later in EXAMPLES. The hardness (H) refers to the JIS-A hardness at 23°C and may be measured as described later in EXAMPLES.

The E(%) at 70°C may be varied by the following methods: using a thermoplastic elastomer; introducing a hard segment (e.g., a portion derived from a low-molecular-weight polyol) and a soft segment (e.g., a portion derived from a polyether polyol or polycarbonate polyol) as structural units of the thermoplastic elastomer; appropriately selecting the types of the hard and soft segments in the thermoplastic elastomer; varying the amounts of the hard and soft segment structural units in the thermoplastic elastomer; using a combination of two or more types of soft segments; or varying the type and amount of filler; or other methods. Specifically, by incorporating a filler such as a microfibrillated plant fiber into a thermoplastic elastomer having hard and soft segments, elasticity tends to be provided, resulting in reduced E.

The H at 23°C may be varied by the following methods: using a thermoplastic elastomer; introducing a hard segment (e.g., a portion derived from a low-molecular-weight polyol) and a soft segment (e.g., a portion derived from a polyether polyol or polycarbonate polyol) as structural units of the thermoplastic elastomer; appropriately selecting the types of the hard and soft segments in the thermoplastic elastomer; varying the amounts of the hard and soft segment structural units in the thermoplastic elastomer; or varying the type and amount of filler; or other methods. Specifically, by incorporating a filler such as a microfibrillated plant fiber into a thermoplastic elastomer having hard and soft segments, reinforcement tends to be provided, resulting in increased H.

The relationship "E/H ≤ 0.6" may be satisfied by any one of the following methods alone or as an appropriate combination: (a) incorporating a filler such as a microfibrillated plant fiber into a thermoplastic elastomer having hard and soft segments; (b) using a combination of two or more types of soft segments; or (c) varying the amounts of the hard and soft segment structural units; or other methods.

Herein, "thermoplastic elastomer composites" refer to composites containing thermoplastic elastomers. Composites containing usual rubber components such as natural rubbers, polybutadiene rubbers, or styrene-butadiene rubbers do not correspond to the "thermoplastic elastomer composites".

Examples of the thermoplastic elastomer composites satisfying relationship (1) include composites containing elastomer components and optional other components. In particular, suitable examples include thermoplastic elastomer/filler composites in which fillers such as poorly dispersible fillers (e.g., microfibrillated plant fibers, short fiber celluloses, or gel compounds) are dispersed in thermoplastic elastomers. Such thermoplastic elastomer/filler composites may be prepared, for example, by sufficiently mixing the thermoplastic elastomers with the fillers. The mixing may be carried out by known methods, such as any appropriate method capable of sufficiently mixing the thermoplastic elastomers with the fillers so that the fillers can be sufficiently dispersed in the thermoplastic elastomers. In particular, the composites in which the above-mentioned poorly dispersible fillers are dispersed in thermoplastic elastomers provide enhanced reinforcement and elasticity and therefore excellent ride quality after long-term storage.

Examples of the thermoplastic elastomers of the thermoplastic elastomer/filler composites include olefinbased thermoplastic elastomers, styrene-based thermoplastic elastomers (e.g., styrene-isobutylene-styrene block copolymers (SIBS), styrene-isoprene-styrene block copolymers (SIS), styrene-isobutylene block copolymers (SIB), styrene-butadiene-styrene block copolymers (SBS), styrene-ethylene/butene-styrene block copolymers (SEBS), styrene-ethylene/propylene-styrene block copolymers (SEPS), styrene-ethylene/ethylene/propylene-styrene block copolymers (SEEPS), and styrene-butadiene/butylene-styrene block copolymers (SBBS)), vinyl chloride-based thermoplastic elastomers, urethane-based thermoplastic elastomers, polyamide-based thermoplastic elastomers, polyester-based thermoplastic elastomers, and fluorinated thermoplastic elastomers. Each of these may be used alone, or two or more of these may be used in combination. From the standpoint of ride quality after long-term storage, urethane-based thermoplastic elastomers (thermoplastic polyurethane elastomers (TPU)) are preferred among these.

Examples of the thermoplastic polyurethane elastomers (urethane-based thermoplastic elastomers) include those formed from polyisocyanates and polyols, and optionally chain extenders.

The polyisocyanates for forming the thermoplastic polyurethane elastomers may be any polyisocyanate having two or more isocyanate groups. Examples include aromatic polyisocyanates such as 2,4-toluene diisocyanate, 2,6-toluene diisocyanate, mixtures of 2,4-toluene diisocyanate and 2,6-toluene diisocyanate (TDI), 4,4'-diphenylmethane diisocyanate (MDI), 1,5-naphthylene diisocyanate (NDI), 3,3'-bitolylene-4,4'-diisocyanate (TODI), xylylene diisocyanate (XDI), tetramethylxylylene diisocyanate (TMXDI), p-phenylene diisocyanate (PPDI), and 4,4'-methylene-bis(phenylisocyanate); and alicyclic or aliphatic polyisocyanates such as 4,4'-dicyclohexylmethane diisocyanate ($H_{12}$MDI), hydrogenated xylylene diisocyanate ($H_6$XDI), hexamethylene diisocyanate (HDI), and isophorone diisocyanate (IPDI). Each of these may be used alone, or two or more of these may be used in combination.

Examples of the polyols (high-molecular-weight polyols) for forming the thermoplastic polyurethane elastomers include: polyether polyols such as polyoxyethylene glycol (PEG), polyoxypropylene glycol (PPG), and polyoxytetramethylene glycol (PTMG); condensed polyester polyols such as polyethylene adipate (PEA), polybutylene adipate (PBA), and polyhexamethylene adipate (PHMA); lactone-based polyester polyols such as poly-ε-caprolactone (PCL); polycarbonate polyols such as polyhexamethylene carbonate; and acrylic polyols. From the standpoint of ride quality after long-term storage, polyether polyols or polycarbonate polyols are preferred among these. Each of these may be used alone, or two or more of these may be used in combination.

Examples of the chain extenders include low-molecular-weight polyols, polyamines, and amino alcohols. From the standpoint of ride quality after long-term storage, low-molecular-weight polyols are preferred among these.

Examples of the low-molecular-weight polyols include: triols such as glycerol, trimethylolethane, trimethylolpropane, and hexane triol; tetraols such as pentaerythritol; and hexaols such as sorbitol. Other examples include diols such as ethylene glycol, diethylene glycol, triethylene glycol, 1,3-propanediol, 1,3-butanediol, 1,4-butanediol, neopentyl glycol, 1,6-hexanediol, 1,8-octanediol, aniline-based diols, and bisphenol A-based diols. Each of these may be used alone, or two or more of these may be used in combination.

Examples of the polyamines include: triamines such as diethylenetriamine and dipropylenetriamine; and diamines including aliphatic diamines such as ethylenediamine and hexamethylenediamine, alicyclic diamines such as isophorone diamine and piperazine, and aromatic diamines. The aromatic diamines may be, for example, monocyclic aromatic diamines in which two amino groups are bound to one aromatic ring, or polycyclic aromatic diamines having two aminophenyl groups in which at least one amino group is bound to one aromatic ring. Examples of the monocyclic aromatic diamines include those in which the amino group is directly bound to the aromatic ring, such as phenylenediamine, toluene diamine, diethyltoluene diamine, and dimethylthiotoluene diamine; and those in which the amino group is bound to the aromatic ring via a lower alkylene group, such as xylylenediamine. Examples of the polycyclic aromatic diamines include diaminodiphenyl alkanes (e.g., 4,4'-diaminodiphenylmethane and derivatives thereof). Each of these may be used alone, or two or more of these may be used in combination.

The thermoplastic polyurethane elastomers may be synthesized by known methods, including a one-shot method and a prepolymer method. The one-shot method involves reacting polyisocyanates with polyols and other materials all at once to obtain a high molecular weight, while the prepolymer method involves reacting polyisocyanates with polyols and other materials in multiple steps to obtain a high molecular weight, and may include, for example, temporarily synthesizing a low-molecular-weight urethane prepolymer and subsequently reacting the prepolymer with the above-mentioned chain extenders to obtain a high molecular weight.

The polyurethanes may be synthesized using known catalysts. Examples of the catalysts include: monoamines such as triethylamine and N,N-dimethylcyclohexylamine; polyamines such as N,N,N',N'-tetramethylethylenediamine; cyclic diamines such as 1,8-diazabicyclo[5.4.0]-7-undecene (DBU) and triethylenediamine; and tin catalysts such as dibutyltin dilaurate and dibutyltin diacetate. Each of these may be used alone, or two or more of these may be used in combination.

The proportions of the polyisocyanates and the polyols in the polyurethanes are not limited, but the ratio of the isocyanate groups of the polyisocyanates to the hydroxy groups of the polyols, NCO/OH ratio (molar ratio), is preferably 0.5 or higher, more preferably 0.7 or higher, still more preferably 0.8 or higher. When the ratio is lower than the lower limit, the polyisocyanate content tends to be so small that the mechanical strength of the urethanes can decrease. Conversely, the NCO/OH ratio (molar ratio) is preferably 2.5 or lower, more preferably 2.2 or lower, still more preferably 2.0 or lower. When the ratio is higher than the upper limit, the polyisocyanate content may be excessive and lead to more absorption of moisture, resulting in a decrease in the mechanical strength of the urethanes.

The thermoplastic elastomer/filler composites may contain any appropriate filler used in the application field as the fillers, such as fibers. Even fibrous fillers, which are generally difficult to disperse in thermoplastic elastomers, can be suitably used. For example, even poorly dispersible fillers, such as microfibrillated plant fibers, short fiber celluloses, and gel compounds, may be suitably used. From the standpoint of ride quality after long-term storage, microfibrillated plant fibers are preferred among these.

As the microfibrillated plant fibers, cellulose microfibrils are preferred in order to obtain good reinforcement. Any cellulose microfibril derived from naturally-occurring materials may be used. Examples include those derived from: resource biomass such as fruits, grains, and root vegetables; wood, bamboo, hemp, jute, and kenaf, and pulp, paper, or cloth produced therefrom; waste biomass such as agricultural waste, food waste, and sewage sludge; unused biomass such as rice straw, wheat straw, and thinnings; and celluloses produced by ascidians, acetic acid bacteria, or other organisms. Each of these microfibrillated plant fibers may be used alone, or two or more of these may be used in combination.

Herein, "cellulose microfibrils" typically refer to cellulose fibers having an average fiber diameter of 10 um or less, more typically cellulose fibers having a microstructure with an average fiber diameter of 500 nm or less, formed by aggregation of cellulose molecules. Typical cellulose microfibrils are formed of aggregates of cellulose fibers having an average fiber diameter as indicated above, for example.

The microfibrillated plant fibers may be produced by any method, such as by chemically treating the raw materials of the cellulose microfibrils with alkali such as sodium hydroxide as needed, followed by mechanically grinding or beating using a refiner, a twin screw kneader (twin screw extruder), a twin screw kneading extruder, a high pressure homogenizer, a media-agitating mill, a stone mill, a grinder, a vibration mill, a sand grinder, or other devices. With such methods, substantially lignin-free microfibrillated plant fibers can be produced because lignin is separated from the raw materials by the chemical treatment. Other methods include ultra-high pressure treatment of the raw materials of the cellulose microfibrils.

The microfibrillated plant fibers may be commercially available from Sugino Machine Limited, etc.

The microfibrillated plant fibers may be prepared by the above production method followed by further treatment such as oxidation or various chemical modifications, or may be prepared by treatment (e.g., oxidation or various chemical modifications) of cellulose materials that are naturally-occurring materials usable as the sources of the cellulose microfibrils (e.g., wood, pulp, bamboo, hemp, jute, kenaf, agricultural waste, cloth, paper, ascidian cellulose, etc.), optionally followed by a fibrillation process. For example, oxidized microfibrillated plant fibers may be suitably used.

An exemplary oxidation process uses an N-oxyl compound, for example. The oxidation process using an N-oxyl compound may be carried out by acting a co-oxidant on microfibrillated plant fibers in water in the presence of the N-oxyl compound as an oxidation catalyst. Examples of the N-oxyl compound include 2,2,6,6-tetramethylpiperidine-1-oxyl (TEMPO) and derivatives thereof. Examples of the co-oxidant include sodium hypochlorite.

The average fiber diameter of the microfibrillated plant fibers is preferably 50 nm or less. When it is within the range indicated above, the microfibrillated plant fibers can exhibit improved dispersion in the elastomers. Moreover, the damage of the microfibrillated plant fibers during processing tends to be reduced. The average fiber diameter is 50 nm or less. The lower limit of the average fiber diameter is 20 nm or more, because otherwise the entangled microfibrillated plant fibers would be less likely to be separated from each other and thus less likely to be dispersed.

The average fiber length of the microfibrillated plant fibers is 300 nm or more, still more preferably 500 nm or more. The average fiber length is 3 um or less, most preferably 2 um or less. When the average fiber length is less than the lower limit or more than the upper limit, the same tendency as described for the average fiber diameter tends to occur.

When a combination of two or more microfibrillated plant fibers is used, the average fiber diameter and the average fiber length are each calculated as the average of all the microfibrillated plant fibers.

Herein, the average fiber diameter and average fiber length of the microfibrillated plant fibers may be measured by image analysis using scanning electron micrographs, image analysis using transmission electron micrographs, image analysis using atomic force micrographs, X-ray scattering data analysis, aperture impedance method (Coulter principle), or other methods.

The short fiber celluloses have good dispersibility in the elastomers and can maintain or improve the tensile strength of the elastomers, without impairing it, so that good elastomer properties can be obtained.

The fiber width of the short fiber celluloses is preferably 3 to 200 um. Usually, it is preferred to incorporate fibrous fillers having a smaller fiber width into the thermoplastic elastomer composites from the standpoint of reinforcement of the elastomers. However, fibrous fillers having a small fiber width tend not to orientate themselves. Hence, from the standpoints of the balance between the reinforcement of the elastomers and the orientation of the fibers and of dispersion in the elastomers, the fiber width is preferably 10 um or larger, more preferably 15 um or larger, still more preferably 20 um or larger, but is preferably 120 um or smaller, more preferably 80 um or smaller, still more preferably 50 um or smaller.

The fiber length of the short fiber celluloses is preferably 20 to 1000 um. Like the fiber width, from the standpoints of the balance between the reinforcement of the elastomers and the orientation of the fibers and of dispersion in the elastomers, the fiber length is preferably 50 um or longer, more preferably 100 um or longer, still more preferably 200 um or longer, but is preferably 700 um or shorter, more preferably 500 um or shorter.

The ratio of the fiber length to the fiber width (fiber length/fiber width) of the short fiber celluloses is preferably 5 to 1000. Like the fiber width, from the standpoint of the balance between the reinforcement of the elastomers and the orientation of the fibers, the ratio of the fiber length to the fiber width is preferably 6 or higher, more preferably 10 or higher, but is preferably 800 or lower, more preferably 500 or lower, still more preferably 400 or lower, particularly preferably 300 or lower.

The fiber width and fiber length of the short fiber celluloses may be measured by image analysis using scanning atomic force micrographs, image analysis using scanning electron micrographs, image analysis using transmission electron micrographs, X-ray scattering data analysis, aperture impedance method (Coulter principle), or other methods.

"Gel compounds" refer to materials produced by gelation of microfibrillated plant fibers or short fiber celluloses. Such gel compounds produced by gelation may be dispersed well. The gelation may be carried out by any method, such as by stirring with an ultra-high pressure homogenizer or other devices.

The amount of the fillers per 100 parts by mass of the thermoplastic elastomers in the thermoplastic elastomer/filler composites is preferably 0.1 parts by mass or more, more preferably 0.5 parts by mass or more, still more preferably 1 part by mass or more. The upper limit of the amount is preferably 50 parts by mass or less, more preferably 30 parts by mass or less, still more preferably 20 parts by mass or less, particularly preferably 10 parts by mass or less. When the amount is within the range indicated above, good ride quality after long-term storage tends to be obtained.

As described earlier, the thermoplastic elastomer/filler composites satisfying relationship (1) may be prepared by sufficiently mixing the thermoplastic elastomers with the fillers. In particular, they are preferably prepared by a method including: preparing a dispersion containing the above-mentioned high-molecular-weight polyols (polyols for forming the thermoplastic polyurethane elastomers) and the above-mentioned poorly dispersible fillers, reacting the dispersion with the above-mentioned polyisocyanates (polyisocyanates for forming the thermoplastic polyurethane elastomers) to prepare a prepolymer, and reacting the prepolymer with the above-mentioned low-molecular-weight polyols. In this case, good ride quality after long-term storage tends to be obtained.

The mechanism of how the thermoplastic elastomer/filler composites produced by such a method achieve the effect of providing good ride quality after long-term storage is not clear, but is believed to be as follows.

Rubbers, when properly crosslinked, have high resilience even after they are compressed for a long time, and thus have a small compression set, whereas thermoplastic polyurethane elastomers, which exhibit elasticity due to the pseudo crosslinks formed by aggregation via hydrogen bonds, have reduced resilience when they are compressed for a long time, and thus tend to exhibit deterioration in compression set. To overcome this problem, the above method is believed to improve flexibility and toughness by reacting the polyisocyanates with the dispersion prepared by mixing the high-molecular-weight polyols with the poorly dispersible fillers, such as microfibrillated plant fibers, short fiber celluloses, or gel compounds, to cause double-network-like polymer entanglement. Specifically, it is believed that the reinforcement and elasticity are improved by mixing (introducing) the poorly dispersible fillers (second soft segment) into the thermoplastic polyurethane elastomers having soft (high-molecular-weight polyols) and hard segments (low-molecular-weight polyols) to cause double-network-like polymer entanglement. The effect of providing good ride quality after long-term storage is believed to be due to the above mechanism of action.

Moreover, it is believed that thermoplastic polyurethane elastomers, when crosslinked similarly to rubbers, have a small compression set. However, such elastomers are disadvantageously not recyclable. In contrast, the thermoplastic elastomer/filler composites produced by the above method are dissoluble and reformable and thus highly recyclable.

The dispersion containing the high-molecular-weight polyols and the poorly dispersible fillers may be prepared by known methods, such as by mixing the high-molecular-weight polyols with the poorly dispersible fillers in a high-speed homogenizer, an ultrasonic homogenizer, a colloid mill, a blender mill, an electronic control stirrer, or other devices. Specifically, a dispersion in which the poorly dispersible fillers are dispersed in the high-molecular-weight polyols may be prepared by preparing an aqueous dispersion of the poorly dispersible fillers, followed by substitution with an alcohol (e.g., ethanol, butanol, or methanol), mixing the resulting dispersion with the high-molecular-weight polyols, and then removing the alcohol and water. The temperature and time for the preparation may be appropriately selected so that the poorly dispersible fillers can be dispersed in water or alcohol.

The ratio between the high-molecular-weight polyols and the poorly dispersible fillers mixed in the dispersion may be appropriately varied to correspond to the amount of the fillers per 100 parts by mass of the thermoplastic elastomers in the thermoplastic elastomer/filler composites as described above.

The step of reacting the dispersion with the polyisocyanates to prepare a prepolymer and the step of reacting the prepolymer with the low-molecular-weight polyols may be carried out by the above-mentioned prepolymer method, for example. Mixing, forming, or other processes may optionally be performed to prepare the thermoplastic elastomer/filler composites. The reaction temperature and time may be appropriately selected according to the progress of the reaction. From the standpoint of filler dispersion, the mixing or forming processes are preferably carried out using rotation-revolution mixing devices. Herein, "rotation-revolution mixing devices" refer to mixing devices having both rotation and revolution mechanisms, such as planetary centrifugal mixers and planetary mixers.

The planetary centrifugal mixers are devices that can stir materials by rotating and revolving a container containing the materials. Sufficient mixing can be accomplished by the forces such as centrifugal force and shear force produced by the rotation and revolution of the container. Examples of the planetary centrifugal mixers include mixers described in JP 2015-52034 A, which is incorporated herein by reference. Commercial products include the planetary centrifugal mixers AWATORIRENTARO ARE-310 and ARV-310 both available from THINKY CORPORATION.

The planetary mixers are planetary movement mixers having one or more blades (impellers) with rotation and revolution functions as a stirring mechanism.

The rotation and revolution speeds of the planetary centrifugal mixers or planetary mixers may be appropriately selected within a range that enables good mixing while taking into consideration the materials used, the amounts thereof, and other factors.

The thermoplastic elastomer/filler composites may contain other components as long as they do not inhibit the advantageous effect.

The thermoplastic elastomer composites satisfying relationship (1), such as the thermoplastic elastomer/filler composites described above, may be used as masterbatches. The thermoplastic elastomer/filler composites in which fillers are sufficiently dispersed in elastomers may be mixed with other components to prepare an elastomer composition in which the fillers are sufficiently dispersed. Thus, good ride quality after long-term storage can be obtained.

The elastomer composition used in the tires of the present invention contains one or more of the thermoplastic elastomer composites.

The amount of the thermoplastic elastomers based on 100% by mass of the elastomer components in the elastomer composition is not limited, but it is preferably 5% by mass or more, more preferably 10% by mass or more, still more preferably 20% by mass or more. The upper limit is not limited and may be 100% by mass. When the amount is within the range indicated above, good ride quality after long-term storage tends to be obtained.

The elastomer composition may contain additional elastomer components other than the elastomers (elastomer components) used in the thermoplastic elastomer composites. The additional elastomer components may include diene rubbers. Examples of the diene rubbers include isoprene-based rubbers, polybutadiene rubbers (BR), styrene-butadiene rubbers (SBR), styrene-isoprene-butadiene rubbers (SIBR), ethylene-propylene-diene rubbers (EPDM), chloroprene rubbers (CR), and acrylonitrile-butadiene rubbers (NBR). Other examples include butyl-based rubbers and fluororubbers. Moreover, the above-mentioned thermoplastic elastomers (e.g., styrene-based thermoplastic elastomers, urethane-based thermoplastic elastomers) may also be used. Each of these may be used alone, or two or more of these may be used in combination. Preferred among the additional elastomers are SBR, BR, and isoprene-based rubbers because they are suitable in tire applications.

The diene rubbers may be either unmodified or modified diene rubbers.

The modified diene rubbers may be any diene rubber having a functional group interactive with a filler such as silica. Examples include a chain end-modified diene rubber obtained by modifying at least one chain end of a diene rubber with a compound (modifier) having the functional group (i.e., a chain end-modified diene rubber terminated with the functional group); a backbone-modified diene rubber having the functional group in the backbone; a backbone- and chain end-modified diene rubber having the functional group in both the backbone and chain end (e.g., a backbone- and chain end-modified diene rubber in which the backbone has the functional group and at least one chain end is modified with the modifier); and a chain end-modified diene rubber that has been modified (coupled) with a polyfunctional compound having two or more epoxy groups in the molecule so that a hydroxy or epoxy group is introduced.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Any SBR may be used, and examples include emulsionpolymerized styrene-butadiene rubbers (E-SBR) and solutionpolymerized styrene-butadiene rubbers (S-SBR). Each of these may be used alone, or two or more of these may be used in combination.

The styrene content of the SBR is preferably 5% by mass or higher, more preferably 10% by mass or higher, still more preferably 15% by mass or higher. The styrene content is also preferably 60% by mass or lower, more preferably 40% by mass or lower, still more preferably 30% by mass or lower. When the styrene content is within the range indicated above, the advantageous effect can be more suitably achieved.

Herein, the styrene content of the SBR is determined by $^1$H-NMR.

SBR products manufactured or sold by Sumitomo Chemical Co., Ltd., JSR Corporation, Asahi Kasei Corporation, Zeon Corporation, etc. may be used as the SBR.

The SBR may be either unmodified or modified SBR. Examples of the modified SBR include those into which functional groups as listed for the modified diene rubbers are introduced.

From the standpoint of properties such as ride quality after long-term storage, the amount of the SBR, if present, based on 100% by mass of the elastomer components in the elastomer composition is preferably 10% by mass or more, more preferably 20% by mass or more. The upper limit is preferably 90% by mass or less, more preferably 80% by mass or less.

Any BR may be used, and examples include high-cis BR having high cis content, BR containing syndiotactic polybutadiene crystals, and BR synthesized using rare earth catalysts (rare earth-catalyzed BR). Each of these may be used alone, or two or more of these may be used in combination. In particular, high-cis BR having a cis content of 90% by mass or higher is preferred in order to improve abrasion resistance.

The BR may be either unmodified or modified BR. Examples of the modified BR include those into which functional groups as listed for the modified diene rubbers are introduced.

From the standpoint of properties such as abrasion resistance, the amount of the BR, if present, based on 100% by mass of the elastomer components in the elastomer composition is preferably 10% by mass or more, more preferably 20% by mass or more. The upper limit is preferably 90% by mass or less, more preferably 80% by mass or less.

Commercial products available from Ube Industries, Ltd., JSR Corporation, Asahi Kasei Corporation, Zeon Corporation, etc. may be used as the BR.

Examples of the isoprene-based rubbers include natural rubbers (NR), polyisoprene rubbers (IR), refined NR, modified NR, and modified IR. Examples of the NR include those commonly used in the rubber industry such as SIR20, RSS#3, and TSR20. Any IR may be used, and examples include those commonly used in the rubber industry such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. Each of these may be used alone, or two or more of these may be used in combination.

From the standpoint of properties such as fuel economy, the amount of the isoprene-based rubbers, if present, based on 100% by mass of the elastomer components in the elastomer composition is preferably 10% by mass or more, more preferably 20% by mass or more. The upper limit is preferably 90% by mass or less, more preferably 80% by mass or less.

From the standpoint of physical properties, the amount of the fillers (total filler amount) per 100 parts by mass of the elastomer components in the elastomer composition is preferably 0.1 parts by mass or more, more preferably 0.5 parts by mass or more, still more preferably 1 part by mass or more. From the standpoint of properties such as filler dispersion, the amount is also preferably 150 parts by mass or less, more preferably 120 parts by mass or less, still more preferably 100 parts by mass or less.

From the standpoint of physical properties, the combined amount of the above-mentioned microfibrillated plant fibers, short fiber celluloses, and gel compounds per 100 parts by mass of the elastomer components in the elastomer composition is preferably 0.1 parts by mass or more, more preferably 0.5 parts by mass or more, still more preferably 1 part by mass or more. From the standpoint of properties such as filler dispersion, the combined amount is also preferably 50 parts by mass or less, more preferably 30 parts by mass or less, still more preferably 20 parts by mass or less, particularly preferably 10 parts by mass or less. It should be noted that the amount of the microfibrillated plant fibers alone is suitably in the same range as indicated above.

From the standpoint of physical properties, the elastomer composition may contain one or more types of silica as filler. Examples of the silica include dry silica (anhydrous silica) and wet silica (hydrous silica). Wet silica is preferred among these because it contains a large number of silanol groups. Commercial products available from Degussa, Rhodia, Tosoh Silica Corporation, Solvay Japan, Tokuyama Corporation, etc. may be used. Each of these may be used alone, or two or more of these may be used in combination.

The amount of the silica per 100 parts by mass of the elastomer components is preferably 25 parts by mass or more, more preferably 30 parts by mass or more, still more preferably 50 parts by mass or more. When the amount is not less than the lower limit, good ride quality after long-term storage tends to be obtained. The upper limit of the amount is not limited, but it is preferably 300 parts by mass or less, more preferably 200 parts by mass or less, still more preferably 170 parts by mass or less, particularly preferably 100 parts by mass or less, most preferably 80 parts by mass or less. When the amount is not more than the upper limit, good dispersion tends to be obtained.

The nitrogen adsorption specific surface area ($N_2SA$) of the silica is preferably 70 $m^2$/g or more, more preferably 140 $m^2$/g or more, still more preferably 160 $m^2$/g or more. When the $N_2SA$ is not less than the lower limit, good ride quality after long-term storage and good tensile strength at break tend to be obtained. The upper limit of the $N_2SA$ of the silica is not limited, but it is preferably 500 $m^2$/g or less, more preferably 300 $m^2$/g or less, still more preferably 250 $m^2$/g or less. When the $N_2SA$ is not more than the upper limit, good dispersion tends to be obtained.

The $N_2SA$ of the silica is measured by the BET method in accordance with ASTM D3037-93.

The elastomer composition containing silica preferably further contains one or more silane coupling agents.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Commercial products available from Degussa, Momentive, Shin-Etsu Silicone, Tokyo Chemical Industry Co., Ltd., AZmax. Co., Dow Corning Toray Co., Ltd., etc. may be used. Each of these may be used alone, or two or more of these may be used in combination.

The amount of the silane coupling agents per 100 parts by mass of the silica is preferably 3 parts by mass or more, more preferably 6 parts by mass or more. When the amount is 3 parts by mass or more, good properties such as tensile strength at break tend to be obtained. The amount is also preferably 20 parts by mass or less, more preferably 15 parts by mass or less. When the amount is 20 parts by mass or less, an effect commensurate with the amount tends to be produced.

From the standpoint of physical properties, the elastomer composition preferably contains one or more types of carbon black as filler. Moreover, the use of carbon black tends to provide good filler dispersion by increasing the viscosity of the elastomer composition to increase shear.

Any carbon black may be used, and examples include N134, N110, N220, N234, N219, N339, N330, N326, N351, N550, and N762. Commercial products available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. may be used. Each of these may be used alone, or two or more of these may be used in combination.

The amount of the carbon black per 100 parts by mass of the elastomer components is preferably 1 part by mass or more, more preferably 3 parts by mass or more. When the amount is not less than the lower limit, good properties such as abrasion resistance and ride quality after long-term storage tend to be obtained. The amount is also preferably 20 parts by mass or less, more preferably 15 parts by mass or less. When the amount is not more than the upper limit, the elastomer composition tends to provide good processability.

The nitrogen adsorption specific surface area ($N_2SA$) of the carbon black is preferably 50 $m^2/g$ or more, more preferably 80 $m^2/g$ or more, still more preferably 100 $m^2/g$ or more. When the $N_2SA$ is not less than the lower limit, good abrasion resistance and good ride quality after long-term storage tend to be obtained. The $N_2SA$ is also preferably 200 $m^2/g$ or less, more preferably 150 $m^2/g$ or less, still more preferably 130 $m^2/g$ or less. The carbon black having a $N_2SA$ of not more than the upper limit tends to provide good dispersion.

The nitrogen adsorption specific surface area of the carbon black can be determined in accordance with JIS K6217-2:2001.

The elastomer composition may contain additional fillers other than silica and carbon black. Examples of such additional fillers include calcium carbonate, talc, alumina, clay, aluminum hydroxide, aluminum oxide, and mica.

The elastomer composition may contain one or more plasticizers. Any plasticizer may be used, and examples include liquid plasticizers which are liquid at 25°C and have plasticizing properties, such as oils and liquid resins, and solid plasticizers which are solid at 25°C and have plasticizing properties, such as resins (polymers which are solid at room temperature (25°C)). Each of these plasticizers may be used alone, or two or more of these may be used in combination.

The amount of the plasticizers (the combined amount of the liquid and solid plasticizers and other plasticizers) per 100 parts by mass of the elastomer components is preferably 1 part by mass or more, more preferably 3 parts by mass or more, still more preferably 5 parts by mass or more. The amount is also preferably 80 parts by mass or less, more preferably 60 parts by mass or less, still more preferably 50 parts by mass or less. When the amount is within the range indicated above, good ride quality after long-term storage tends to be obtained.

Any oil may be used, and examples include conventional oils, including, for example: process oils such as paraffinic process oils, aromatic process oils, and naphthenic process oils; low PCA (polycyclic aromatic) process oils such as TDAE and MES; vegetable oils; and mixtures thereof. From the standpoints of abrasion resistance and tensile properties, aromatic process oils are preferred among these. Specific examples of the aromatic process oils include Diana Process Oil AH series available from Idemitsu Kosan Co., Ltd.

Any liquid resin may be used, and examples include liquid aromatic vinyl polymers, coumarone-indene resins, indene resins, terpene resins, rosin resins, and hydrogenated products thereof.

"Liquid aromatic vinyl polymers" refer to resins produced by polymerization of α-methylstyrene and/or styrene. Examples include liquid resins such as styrene homopolymers, α-methylstyrene homopolymers, and copolymers of α-methylstyrene and styrene.

"Liquid coumarone-indene resins" refer to resins that contain coumarone and indene as main monomer components forming the skeleton (backbone) of the resins. Examples of monomer components which may be contained in the skeleton in addition to coumarone and indene include styrene, α-methylstyrene, methylindene, and vinyltoluene.

"Liquid indene resins" refer to liquid resins that contain indene as a main monomer component forming the skeleton (backbone) of the resins.

"Liquid terpene resins" refer to liquid terpene-based resins typified by resins produced by polymerization of terpene compounds such as α-pinene, β-pinene, camphene, or dipentene, and terpenephenol resins produced from terpene compounds and phenolic compounds.

"Liquid rosin resins" refer to liquid rosin-based resins typified by natural rosins, polymerized rosins, modified rosins, and ester compounds thereof or hydrogenated products thereof.

The amount of the liquid plasticizers per 100 parts by mass of the elastomer components is preferably 1 part by mass or more, more preferably 3 parts by mass or more, still more preferably 5 parts by mass or more. The amount is also preferably 50 parts by mass or less, more preferably 30 parts by mass or less, still more preferably 20 parts by mass or less. When the amount is within the range indicated above, good ride quality after long-term storage tends to be obtained.

Any solid resin may be used, and examples include solid styrene resins, coumarone-indene resins, terpene resins, p-t-butylphenol acetylene resins, acrylic resins, dicyclopentadiene resins (DCPD resins), C5 petroleum resins, C9 petroleum resins, and C5/C9 petroleum resins. Each of these may be used alone, or two or more of these may be used in combination.

"Solid styrene resins" refer to solid polymers produced from styrenic monomers as structural monomers, and examples include polymers produced by polymerization of styrenic monomers as main components (at least 50% by mass). Specific examples include homopolymers produced by polymerization of single styrenic monomers (e.g., styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, or p-chlorostyrene), copolymers produced by copolymerization of two or more styrenic monomers, and copolymers of styrenic monomers and additional monomers copolymerizable therewith.

Examples of the additional monomers include acrylonitriles such as acrylonitrile and methacrylonitrile; unsaturated carboxylic acids such as acrylic acid and methacrylic acid; unsaturated carboxylic acid esters such as methyl acrylate and methyl methacrylate; dienes such as chloroprene, butadiene, and isoprene; olefins such as 1-butene and 1-pentene; and $\alpha,\beta$-unsaturated carboxylic acids and acid anhydrides thereof such as maleic anhydride.

In particular, solid $\alpha$-methylstyrene resins (e.g., $\alpha$-methylstyrene homopolymers, copolymers of $\alpha$-methylstyrene and styrene) are preferred.

Examples of the solid coumarone-indene resins include solid resins having structural units as described for the liquid coumarone-indene resins.

Examples of the solid terpene resins include polyterpene, terpene phenol, and aromatic modified terpene resins.

"Polyterpene resins" refer to resins produced by polymerization of terpene compounds, or hydrogenated products of the resins. "Terpene compounds" refer to hydrocarbons having a composition represented by $(C_5H_8)_n$ or oxygen-containing derivatives thereof, each of which has a terpene backbone and is classified as, for example, a monoterpene $(C_{10}H_{16})$, sesquiterpene $(C_{15}H_{24})$, or diterpene $(C_{20}H_{32})$. Examples of the terpene compounds include $\alpha$-pinene, $\beta$-pinene, dipentene, limonene, myrcene, alloocimene, ocimene, $\alpha$-phellandrene, $\alpha$-terpinene, $\gamma$-terpinene, terpinolene, 1,8-cineole, 1,4-cineole, $\alpha$-terpineol, $\beta$-terpineol, and $\gamma$-terpineol.

Examples of the solid polyterpene resins include solid terpene resins made from the aforementioned terpene compounds, such as $\alpha$-pinene resins, $\beta$-pinene resins, limonene resins, dipentene resins, and $\beta$-pinene-limonene resins, and solid hydrogenated terpene resins produced by hydrogenation of these terpene resins.

Examples of the solid terpene phenol resins include solid resins produced by copolymerization of the aforementioned terpene compounds and phenolic compounds, and solid resins produced by hydrogenation of these resins. Specific examples include solid resins produced by condensation of the aforementioned terpene compounds, phenolic compounds, and formaldehyde. Examples of the phenolic compounds include phenol, bisphenol A, cresol, and xylenol.

Examples of the solid aromatic modified terpene resins include solid resins formed by modification of terpene resins with aromatic compounds, and solid resins produced by hydrogenation of these resins. The aromatic compounds may be any compound having an aromatic ring, including, for example: phenol compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene and styrene derivatives such as alkylstyrenes, alkoxystyrenes, and unsaturated hydrocarbon group-containing styrenes; coumarone; and indene.

Examples of the solid p-t-butylphenol acetylene resins include solid resins produced by condensation of p-t-butylphenol and acetylene.

Any solid acrylic resin may be used. However, solvent-free solid acrylic resins are suitable because they contain little impurities and provide a sharp molecular weight distribution.

Examples of the solvent-free solid acrylic resins include (meth)acrylic resins (polymers) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5010166, and annual research report TREND 2000 issued by Toagosei Co., Ltd., vol. 3, pp. 42-45, all of which are incorporated herein by reference) using no or minimal amounts of auxiliary raw materials such as polymerization initiators, chain transfer agents, and organic solvents. Herein, the term "(meth)acrylic" means methacrylic and acrylic.

Preferred are solid acrylic resins which are substantially free of auxiliary raw materials such as polymerization initiators, chain transfer agents, and organic solvents. Also preferred are solid acrylic resins having a relatively narrow compositional distribution or molecular weight distribution, produced by continuous polymerization.

As described above, solid acrylic resins which are substantially free of auxiliary raw materials such as polymerization initiators, chain transfer agents, and organic solvents, namely those of high purity, are preferred. The purity of the solid acrylic resins (the resin content of the resins) is preferably 95% by mass or higher, more preferably 97% by mass or higher.

Examples of the monomer components of the solid acrylic resins include (meth)acrylic acids and (meth)acrylic acid derivatives such as (meth)acrylic acid esters (e.g., alkyl esters, aryl esters, and aralkyl esters), (meth)acrylamides, and (meth)acrylamide derivatives.

In addition to the (meth)acrylic acids or (meth)acrylic acid derivatives, aromatic vinyls, such as styrene, $\alpha$-methylstyrene, vinyltoluene, vinylnaphthalene, divinylbenzene, trivinylbenzene, or divinylnaphthalene, may also be used as monomer components of the solid acrylic resins.

The solid acrylic resins may be formed only of the (meth)acrylic components or may further contain constituent components other than the (meth)acrylic components.

Moreover, the solid acrylic resins may contain a hydroxy, carboxyl, or silanol group, or other groups.

The amount of the solid plasticizers per 100 parts by mass of the elastomer components is preferably 1 part by mass or more, more preferably 3 parts by mass or more, still more preferably 5 parts by mass or more. The amount is also preferably 50 parts by mass or less, more preferably 30 parts by mass or less, still more preferably 20 parts by mass or less. When the amount is within the range indicated above, good ride quality after long-term storage tends to be obtained.

The liquid and solid plasticizers may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

From the standpoint of properties such as crack resistance and ozone resistance, the elastomer composition preferably contains one or more antioxidants.

Any antioxidant may be used, and examples include naphthylamine antioxidants such as phenyl-$\alpha$-naphthylamine; diphenylamine antioxidants such as octylated diphenylamine and 4,4'-bis($\alpha,\alpha'$-dimethylbenzyl)diphenylamine; p-phenylenediamine antioxidants such as N-isopropyl-N'-phenyl-p-phenylenediamine, N-(1,3-dimethylbutyl)-N'-phenylp-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Preferred among these are p-phenylenediamine or quinoline antioxidants, with N-(1,3-dimethylbutyl)-N'-phenyl-p-phenylenediamine or 2,2,4-trimethyl-1,2-dihydroquinoline polymer being more preferred. Commercial products available from Seiko Chemical Co., Ltd., Sumitomo Chemical Co., Ltd., Ouchi Shinko Chemical Industrial Co., Ltd., Flexsys, etc. may be used.

The amount of the antioxidants per 100 parts by mass of the elastomer components is preferably 0.2 parts by mass or more, more preferably 0.5 parts by mass or more. When the amount is not less than the lower limit, sufficient ozone resistance tends to be obtained. The amount is preferably 7.0 parts by mass or less, more preferably 4.0 parts by mass or less. When the amount is not more than the upper limit, a good appearance tends to be obtained.

The elastomer composition may contain one or more types of stearic acid. The amount of the stearic acid per 100 parts by mass of the elastomer components is preferably 0.5 to 10 parts by mass, more preferably 0.5 to 5 parts by mass.

The stearic acid may be conventional ones, e.g., available from NOF Corporation, Kao Corporation, FUJIFILM Wako Pure Chemical Corporation, or Chiba Fatty Acid Co., Ltd.

The elastomer composition preferably contains one or more types of zinc oxide. The amount of the zinc oxide per 100 parts by mass of the elastomer components is preferably 0.5 to 10 parts by mass, more preferably 1 to 5 parts by mass.

The zinc oxide may be conventional ones, e.g., available from Mitsui Mining & Smelting Co., Ltd., Toho Zinc Co., Ltd., HakusuiTech Co., Ltd., Seido Chemical Industry Co., Ltd., or Sakai Chemical Industry Co., Ltd.

The elastomer composition may contain one or more waxes. Any wax may be used, and examples include petroleum waxes, natural waxes, and synthetic waxes produced by purifying or chemically treating a plurality of waxes. Each of these waxes may be used alone, or two or more of these may be used in combination.

Examples of the petroleum waxes include paraffin waxes and microcrystalline waxes. The natural waxes may be any wax derived from non-petroleum resources, and examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of the foregoing waxes. Commercial products available from Ouchi Shinko Chemical Industrial Co., Ltd., Nippon Seiro Co., Ltd., Seiko Chemical Co., Ltd., etc. may be used. The amount of the waxes may be selected appropriately in view of ozone resistance and cost.

The elastomer composition may contain one or more types of sulfur to moderately crosslink the polymer chains, thereby providing a good balance between the above-mentioned properties.

The amount of the sulfur per 100 parts by mass of the elastomer components is preferably 0.1 parts by mass or more, more preferably 0.5 parts by mass or more, still more preferably 0.7 parts by mass or more. The amount is preferably 6.0 parts by mass or less, more preferably 4.0 parts by mass or less, still more preferably 3.0 parts by mass or less.

Examples of the sulfur include those commonly used in the rubber industry, such as powdered sulfur, precipitated sulfur, colloidal sulfur, insoluble sulfur, highly dispersible sulfur, and soluble sulfur. Commercial products available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc. may be used. Each of these may be used alone, or two or more of these may be used in combination.

The elastomer composition may contain one or more vulcanization accelerators.

The amount of the vulcanization accelerators is not limited and may be arbitrarily selected according to the desired cure rate or crosslink density. However, the amount is usually 0.3 to 10 parts by mass, preferably 0.5 to 7 parts by mass, per 100 parts by mass of the elastomer components.

Any type of vulcanization accelerator may be used including usual ones. Examples of the vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Each of these may be used alone, or two or more of these may be used in combination. From the standpoint of the balance between the above-mentioned properties, sulfenamide or guanidine vulcanization accelerators are preferred among these.

The elastomer composition may contain any appropriate additive usually used in the application field, such as release agents and pigments, in addition to the above-mentioned components.

The elastomer composition may be prepared by known methods. For example, it may be prepared from the above-described thermoplastic elastomer composites and other components by known forming techniques such as injection molding. Alternatively, it may be prepared by kneading the thermoplastic elastomer composites and other components in a rubber kneading machine such as an open roll mill or Banbury mixer, optionally followed by crosslinking, for example. The elastomer composition may also be prepared by mixing the above-described thermoplastic elastomers, fillers, additional elastomer components, and other components by the above-mentioned known forming techniques such as injection molding or using the above-mentioned rubber kneading machine or other kneading means to later form the thermoplastic elastomer composites in the composition. With regard to the kneading conditions, the kneading temperature is usually 50 to 200°C, preferably 80 to 190°C, and the kneading time is usually 30 seconds to 30 minutes, preferably one minute to 30 minutes.

The elastomer composition may be applied to tires, footwear soles, floor materials, vibration-proof materials, seismic isolators, butyl frame materials, belts, hoses, packing materials, medical stoppers, and other industrial rubber products, and other applications. In particular, the elastomer composition is preferably used as an elastomer composition for tires due to its excellent ride quality after long-term storage.

The elastomer composition may be used in any tire component. Examples of such tire components include cap treads, sidewalls, base treads, bead apexes, clinch apexes, innerliners, undertreads, breaker toppings, and ply toppings. In particular, it is suitable for tire supporting components which mainly support the tire interior or sides, e.g., the tire frame. The tire supporting components include tire components other than cap treads, such as base treads, sidewalls, bead apexes, and clinch apexes.

The elastomer composition is suitable for use in tires. Examples of the tires include pneumatic tires and airless tires. Pneumatic tires are preferred among these. In particular, summer tires or winter tires (studless winter tires, cold weather tires, snow tires, studded tires, etc.) are suitable. The tires may be used as tires for passenger vehicles, large passenger vehicles, large SUVs, heavy duty vehicles such as trucks and buses, light trucks, or motorcycles, or racing tires (high performance tires), or other tire applications.

The tires can be produced from the elastomer composition by usual methods. For example, they may be produced from the thermoplastic elastomer composites and other components using known forming techniques such as injection molding. Moreover, the tires may be produced by extruding the unvulcanized elastomer composition containing materials as needed into the shape of a tire component, and forming it with other tire components in a tire building machine in a usual manner to build an unvulcanized tire, followed by heating and pressing it in a vulcanizer.

EXAMPLES

The present invention will be specifically described with reference to, but not limited to, examples.

The chemicals used in the preparation of a microfibrillated plant fiber dispersion and the preparation of thermoplastic elastomer composites are listed below.

Microfibrillated plant fiber: biomass nanofiber (trade name "BiNFi-s cellulose", solids content: 2% by mass, moisture content: 98% by mass, average fiber diameter: 20 to 50 nm, average fiber length: 500 to 1000 nm) available from Sugino Machine Limited

TEMPO: 2,2,6,6-tetramethylpiperidine-1-oxyl
Sodium bromide: a product available from FUJIFILM Wako Pure Chemical Corporation
Sodium hypochlorite: a product available from Tokyo Chemical Industry Co., Ltd.
NaOH: a product available from FUJIFILM Wako Pure Chemical Corporation
Hydrochloric acid: a product available from FUJIFILM Wako Pure Chemical Corporation
Alcohol: ethanol available from FUJIFILM Wako Pure Chemical Corporation
Polyether polyol: polytetramethylene ether glycol (PTMEG-1000) available from Hodogaya Chemical
Polycarbonate polyol: polycarbonate diol (DURANOL T4671) available from Asahi Kasei Corporation
Polyisocyanate: Millionate MT available from Tosoh Corporation

Low-molecular-weight polyol: 1,4-butanediol available from Tokyo Chemical Industry Co., Ltd.

(Preparation of microfibrillated plant fiber dispersion (nanocellulose dispersion))

An amount of 10 g of the microfibrillated plant fiber, 150 mg of TEMPO, and 1000 mg of sodium bromide were dispersed in 1000 mL of water. To the dispersion was added a 15% by mass sodium hypochlorite aqueous solution such that the amount of sodium hypochlorite was 5 mmol per gram (absolute dry weight) of the microfibrillated plant fiber, to start the reaction. The pH during the reaction was maintained at 10.0 by dropwise adding a 3M aqueous NaOH solution. The reaction was considered to be completed when the pH no longer changed. The reaction product was filtered through a glass filter and then subjected to five cycles of washing with plenty of water and filtration. Thus, a water-impregnated, reacted fiber (TEMPO-oxidized CNF) with a solids content of 15% by mass was obtained.

(Preparation of thermoplastic elastomer composite)

The TEMPO-oxidized CNF prepared as above was adjusted to pH 2 with hydrochloric acid and dehydrated, and the water was substituted with the alcohol. The resulting product was mixed with the polyol (polyether polyol or polycarbonate polyol), and the alcohol and water were removed to prepare a polyol/CNF dispersion in which the TEMPO-oxidized CNF was mixed into the polyol.

The polyol/CNF dispersion was placed in a separable flask and heated to 80°C. The polyisocyanate was added so that the NCO/OH ratio (the ratio of the isocyanate groups of the polyisocyanate to the hydroxy groups of the polyol) was 1.6, 1.8, or 2.0. The mixture was stirred for three hours under a flow of nitrogen at 80°C to prepare a prepolymer. The prepolymer maintained at 80°C was mixed with the low-molecular-weight polyol (1,4-butanediol). The mixture was deaerated for five minutes using a planetary centrifugal mixer (AWATORIRENTARO ARV-310 available from THINKY CORPORATION) and then cast and formed in a mold. Thus, the thermoplastic elastomer composites 1 to 11 with the formulation ratios indicated in Table 1 were obtained.

The physical properties of the thermoplastic elastomer composites were measured as described below. Table 1 shows the results.

<Measurement of hardness (hardness H at 23°C)>

The shore hardness (JIS-A hardness) at 23°C of the thermoplastic elastomer composites was measured using a type A durometer in accordance with JIS K6253-3 (2012) "Rubber, vulcanized or thermoplastic - Determination of hardness - Part 3: Durometer method".

<Compression set test (compression set E(%) at 70°C)>

Small specimens were prepared from the thermoplastic elastomer composites in accordance with JIS K6262:2013 "Rubber, vulcanized or thermoplastic - Determination of compression set at ambient, elevated or low temperatures". Then, the specimens were subjected to a compression set test at a temperature of 70°C and a compression rate (strain) of 25% for a test time of 24 hours to determine the compression set E(%) at 70°C.

[Table 1]

| | | Thermoplastic elastomer composite | | | | | | | | | 10 11 | |
|---|---|---|---|---|---|---|---|---|---|---|---|---|
| | | 1 | 2 | 3 | 4 | 5 | 6 | 7 | 8 | 9 | | |
| Amount (parts by mass) | Polyether polyol | - | - | - | - | - | - | - | 31 | 31 | 25 | 25 |
| | Polycarbonate polyol | 31 | 31 | 31 | 28 | 28 | 25 | 25 | - | - | - | - |
| | Polyisocyanate (NCO/OH) | 50 (1.6) | 50 (1.6) | 50 (1.6) | 50 (1.8) | 50 (1.8) | 50 (2.0) | 50 (2.0) | 50 (1.6) | 50 (1.6) | 50 (2.0) | 50 (2.0) |
| | Low-molecular-weight polyol | 19 | 19 | 19 | 22 | 22 | 25 | 25 | 19 | 19 | 25 | 25 |
| | TEMPO-oxidized CNF | 0 | 1 | 3 | 0 | 1 | 0 | 1 | 0 | 1 | 0 | 1 |
| Physical properties | Hardness H (23°C) | 75 | 80 | 83 | 81 | 82 | 87 | 87 | 69 | 72 | 75 | 82 |
| | Compression set E (%) (70°C, after 24 hours) | 70 | 44 | 30 | 81 | 22 | 56 | 28 | 69 | 37 | 88 | 40 |
| | E/H | 0.93 | 0.55 | 0.36 | 1.00 | 0.27 | 0.64 | 0.32 | 1.00 | 0.51 | 1.17 | 0.49 |

The chemicals used are listed below.

Thermoplastic elastomer composites: thermoplastic elastomer composites 1 to 11 described above

(Preparation of test tire)

Each thermoplastic elastomer composite was formed into the shape of a sidewall and assembled with other tire components to build an unvulcanized tire, which was then vulcanized at 150°C for 30 minutes to prepare a test tire.

The test tires prepared as above were evaluated for the properties below. Table 2 shows the results.

<Ride quality after long-term storage>

The test tires were mounted on each wheel of a frontengine, front-wheel-drive passenger car of 1500 cc displacement and then left at 40°C for one week. Thereafter, ten drivers each drove the car on a test track under dry road conditions and then subjectively evaluated the ride quality after long-term storage based on the vibration during straight-line driving on a ten-point scale. The results are expressed as a rating relative to Comparative Example 1 (= 100). A higher rating indicates better ride quality after long-term storage.

[Table 2]

| | | Comparative Example | Example | | Comparative Example | Example | Comparative Example | Example | Comparative Example | Example | Comparative Example | Example |
|---|---|---|---|---|---|---|---|---|---|---|---|---|
| | | 1 | 1 | 2 | 2 | 3 | 3 | 4 | 4 | 5 | 5 | 6 |
| Formulation (parts by mass) | Thermoplastic elastomer composite | Composite 1 | Composite 2 | Composite 3 | Composite 4 | Composite 5 | Composite 6 | Composite 7 | Composite 8 | Composite 9 | Composite 10 | Composite 11 |
| | (Elastomer solids content) | 100 | 100 | 100 | 100 | 100 | 100 | 100 | 100 | 100 | 100 | 100 |
| | (TEMPO-oxidized CNF) | 0 | 1 | 3 | 0 | 1 | 0 | 1 | 0 | 1 | 0 | 1 |
| Evaluation | Ride quality after long-term storage | 100 | 108 | 118 | 94 | 128 | 104 | 124 | 92 | 110 | 98 | 110 |

EP 3 919 290 B1

18

Tables 1 and 2 show that excellent ride quality after long-term storage was exhibited by thermoplastic elastomer composites satisfying E/H ≤ 0.6 and tires containing the composites.

**Claims**

1. A thermoplastic elastomer composite, satisfying the following relationship:

$$E/H \leq 0.6$$

wherein E represents a compression set (%) at 70°C and H represents a hardness at 23°C,

wherein the thermoplastic elastomer composite comprises at least one fiber,
wherein the fiber is a microfibrillated plant fiber, wherein the microfibrillated plant fiber is an oxidized microfibrillated plant fiber, wherein the oxidized microfibrillated plant fiber is obtained by oxidation process using an N-oxyl compound, wherein the N-oxyl compound is 2,2,6,6-tetramethylpiperidine-1-oxyl,
wherein an average fiber diameter of the microfibrillated plant fibers is 20 nm or more and 50 nm or less, and wherein an average fiber length of the microfibrillated plant fibers is 300 nm or more and 3 pm or less,
wherein the shore hardness (JIS-A hardness) at 23°C of the thermoplastic elastomer composite is measured using a type A durometer in accordance with JIS K6253-3 (2012) "Rubber, vulcanized or thermoplastic - Determination of hardness - Part 3: Durometer method",
wherein the compression set (%) at 70°C of the thermoplastic elastomer composite is measured at a temperature of 70°C and a compression rate (strain) of 25% for a test time of 24 hours in accordance with JIS K6262:2013 "Rubber, vulcanized or thermoplastic - Determination of compression set at ambient, elevated or low temperatures".

2. The thermoplastic elastomer composite according to claim 1, which has a compression set (E, %) at 70°C of 50% or less.

3. The thermoplastic elastomer composite according to claim 1 or 2, which has a hardness (H) at 23°C of 50 to 95.

4. A tire, comprising a tire component comprising an elastomer composition,
the elastomer composition comprising at least one thermoplastic elastomer composite according to any of claims 1 to 3.

5. The tire according to claim 4,
wherein the thermoplastic elastomer composite satisfies the following relationship:

$$E/H \leq 0.5.$$

6. The tire according to claim 4, wherein the thermoplastic elastomer composite satisfies the following relationship:

$$E/H \leq 0.4.$$

7. The tire according to any one of claims 4 to 6,
wherein the thermoplastic elastomer composite has a compression set (E, %) at 70°C of 50% or less.

8. The tire according to any one of claims 4 to 7,
wherein the thermoplastic elastomer composite has a hardness (H) at 23°C of 50 to 95.

9. The tire according to any one of claims 4 to 8,
wherein the tire component is a tire-supporting component.

**Patentansprüche**

1. Thermoplastischer Elastomer-Verbundwerkstoff, der dem folgenden Verhältnis genügt:

$$E/H \leq 0{,}6$$

wobei E einen Druckverformungsrest (%) bei 70°C darstellt und H eine Härte bei 23°C darstellt,

wobei der thermoplastische Elastomer-Verbundwerkstoff mindestens eine Faser umfasst,
wobei die Faser eine mikrofibrillierte Pflanzenfaser ist, wobei die mikrofibrillierte Pflanzenfaser eine oxidierte mikrofibrillierte Pflanzenfaser ist, wobei die oxidierte mikrofibrillierte Pflanzenfaser durch einen Oxidationsprozess unter Verwendung einer N-Oxyl-Verbindung erhalten ist, wobei die N-Oxyl-Verbindung 2,2,6,6-Tetramethylpiperidin-1-oxyl ist,
wobei ein mittlerer Faserdurchmesser der mikrofibrillierten Pflanzenfasern 20 nm oder mehr und 50 nm oder weniger beträgt, und
wobei eine mittlere Faserlänge der mikrofibrillierten Pflanzenfasern 300 nm oder mehr und 3 μm oder weniger beträgt,
wobei die Shore-Härte (JIS-A-Härte) bei 23°C des thermoplastischen Elastomer-Verbundwerkstoffes unter Verwendung eines Typ-A-Durometers gemäß JIS K6253-3 (2012) "Kautschuk, vulkanisiert oder thermoplastisch - Bestimmung der Härte - Teil 3: Durometer-Verfahren" gemessen ist,
wobei der Druckverformungsrest (%) bei 70°C des thermoplastischen Elastomer-Verbundwerkstoffes bei einer Temperatur von 70°C und einer Kompressionsrate (Stauchung) von 25% für eine Testzeit von 24 Stunden gemäß JIS K6262:2013 "Kautschuk, vulkanisiert oder thermoplastisch - Bestimmung des Druckverformungsrests bei Umgebungs-, erhöhten oder niedrigen Temperaturen" gemessen ist.

2. Thermoplastischer Elastomer-Verbundwerkstoff nach Anspruch 1, der einen Druckverformungsrest (E, %) bei 70°C von 50% oder weniger aufweist.

3. Thermoplastischer Elastomer-Verbundwerkstoff nach Anspruch 1 oder 2, der eine Härte (H) bei 23°C von 50 bis 95 aufweist.

4. Reifen, umfassend eine Reifenkomponente, die eine Elastomerzusammensetzung umfasst,
wobei die Elastomerzusammensetzung mindestens einen thermoplastischen Elastomer-Verbundwerkstoff nach einem der Ansprüche 1 bis 3 umfasst.

5. Reifen nach Anspruch 4,
wobei der thermoplastische Elastomer-Verbundwerkstoff dem folgenden Verhältnis genügt:

$$E/H \leq 0{,}5.$$

6. Reifen nach Anspruch 4,
wobei der thermoplastische Elastomer-Verbundwerkstoff dem folgenden Verhältnis genügt:

$$E/H \leq 0{,}4.$$

7. Reifen nach einem der Ansprüche 4 bis 6,
wobei der thermoplastische Elastomer-Verbundwerkstoff einen Druckverformungsrest (E, %) bei 70°C von 50% oder weniger aufweist.

8. Reifen nach einem der Ansprüche 4 bis 7,
wobei der thermoplastische Elastomer-Verbundwerkstoff eine Härte (H) bei 23°C von 50 bis 95 aufweist.

9. Reifen nach einem der Ansprüche 4 bis 8,
wobei die Reifenkomponente eine Reifen-stützende Komponente ist.

**Revendications**

1.  Composite élastomère thermoplastique, satisfaisant la relation suivante :

$$E/H \leq 0,6,$$

dans laquelle E représente un ensemble de compression (%) à 70 °C et H représente une dureté à 23 °C,

le composite élastomère thermoplastique comprenant au moins une fibre,
la fibre étant une fibre de plante microfibrillée, la fibre de plante microfibrillée étant une fibre de plante microfibrillée oxydée, la fibre de plante microfibrillée oxydée étant obtenue par un processus d'oxydation utilisant un composé N-oxyle, le composé N-oxyle étant le 2,2,6,6-tétraméthylpipéridine-1-oxyle,
un diamètre de fibre moyen des fibres de plante microfibrillées étant de 20 nm ou plus et de 50 nm ou moins et la dureté de rive (dureté JIS-A) à 23 °C du composite élastomère thermoplastique étant mesurée en utilisant un duromètre de type A selon la norme JIS K6253-3 (2012) « Rubber, vulcanized or thermoplastic - Détermination of hardness- Part 3 : Durometer method », l'ensemble de compression (%) à 70 °C du composite élastomère thermoplastique étant mesuré à une température de 70 °C et un taux de compression (contrainte) de 25 % durant un temps de test de 24 heures selon la norme JIS K6262:2013 « Rubber, vulcanized or thermoplastic - Détermination of compression set at ambient, elevated or low températures ».

2.  Composite élastomère thermoplastique selon la revendication 1, qui a un ensemble de compression (E, %) à 70 °C de 50 % ou moins.

3.  Composite élastomère thermoplastique selon la revendication 1 ou 2, qui a une dureté (H) à 23 °C de 50 à 95.

4.  Pneu, comprenant un composant de pneu comprenant une composition élastomère,
la composition élastomère comprenant au moins un composite élastomère thermoplastique selon l'une quelconque des revendications 1 à 3.

5.  Pneu selon la revendication 4,
dans lequel le composite élastomère thermoplastique satisfait la relation suivante :

$$E/H \leq 0,5.$$

6.  Pneu selon la revendication 4,
dans lequel le composite élastomère thermoplastique satisfait la relation suivante :

$$E/H \leq 0,4.$$

7.  Pneu selon l'une quelconque des revendications 4 à 6,
dans lequel le composite élastomère thermoplastique a un ensemble de compression (E, %) à 70 °C de 50 % ou moins.

8.  Pneu selon l'une quelconque des revendications 4 à 7,
dans lequel le composite élastomère thermoplastique a une dureté (H) à 23 °C de 50 à 95.

9.  Pneu selon l'une quelconque des revendications 4 à 8,
dans lequel le composant de pneu est un composant de support de pneu.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016003265 A
- EP 3360695 A1
- US 2008207846 A1
- US 2009018256 A1
- WO 2020110955 A1
- EP 3888938 A1
- US 2017333602 A1
- EP 2886369 A1
- JP 2015052034 A
- US 4414370 A
- JP S596207 A
- JP H558005 B
- JP H1313522 A
- US 5010166 A

**Non-patent literature cited in the description**

- annual research report TREND 2000. Toagosei Co., Ltd, vol. 3, 42-45